# EUROPÄISCHE PATENTSCHRIFT

(11) **EP 0 322 075 B1**
(45) Veröffentlichungstag und Bekanntmachung des Hinweises auf die Patenterteilung: **02.03.1994**
(21) Anmeldenummer: 88202963.0
(22) Anmeldetag: 19.12.1988
(51) Int. Cl.: H04L 12/54

(54) **Koppelfeld und Koppelfeldsteuerung für ein Vermittlungssystem**
Switching network and controller for a switching system
Réseau de commutation et dispositif de commande pour un système de commutation

(30) Priorität: 23.12.1987 DE 3743685
(43) Veröffentlichungstag der Anmeldung: 28.06.1989
(73) Patentinhaber: Philips Patentverwaltung GmbH, 22335 Hamburg (DE); Philips Electronics N.V., 5621 BA Eindhoven (NL)
(72) Erfinder: Killat, Ulrich, Dr., D-2000 Hamburg 56 (DE); Krüger, Johann, Dipl.-Ing., D-2085 Quickborn (DE)
(74) Vertreter: Peuckert, Hermann, Dipl.-Ing.

(56) Entgegenhaltungen:
- NTZ, Band 40, Nr. 8, August 1987, Seiten 572-577, Berlin, DE; U. KILLAT:"Asynchrone Zeitvielfachübermittlung für Breitbandnetze"
- IEEE JOURNAL ON SELECTED AREAS IN COMMUNICATIONS, Band SAC-5, Nr. 8, Oktober1987, Seiten 1315-1326, IEEE, New York, US; M.G.H. KATEUENIS et al.: "Fast switching and fair control of congested flow in broadband networks"
- IEEE INTERNATIONAL CONFERENCE ON COMMUNICATIONS, Seattle, 7.-10. Juni 1987, Band 2, Seiten 794-799, IEEE, New York, US; K.Y. ENG et al.: "A knockout switch for variable-length packets"

## Beschreibung

Die Erfindung bezieht sich auf ein Koppelfeld für ein Vermittlungssystem, bei dem Blöcke nach einem Zeitvielfachverfahren, insbesondere asynchronen Zeitvielfachverfahren, übertragen werden und anhand der im Blockkopf der Blöcke enthaltenen Weglenkungs-Information die Durchschaltung der Blöcke in der Vermittlungseinrichtung erfolgt, welches
- mit einer Anzahl von Zubringerleitungen (Zi) und einer Anzahl von Abnehmerleitungen (Ak) gekoppelt ist,
- eine Anzahl von Eingangspuffern (B) zur Zwischenspeicherung der über die jeweilige Zubringerleitung (Zi) zugeführten Blöcke und
- wenigstens einen einem Eingangspuffer (B) zugeordneten und mit einem Koppelpunkt (CP) gekoppelten Komparator (C) zum Vergleich der Weglenkungs-Information mit der Adresse einer zugeordneten Abnehmerleitung (Ak).

In Kommunikationsnetzen nimmt der Anteil des zu übertragenden Datenverkehrs ständig zu. Zur Bewältigung des Datenverkehrs wurden Vermittlungssysteme getrennt für den Daten- und den Fernsprechverkehr aufgebaut. Da die Datenrate der zu übertragenden Datensignale eine Vielzahl von unterschiedlichen Werten annehmen kann ist es schwierig, Daten- und Fernsprechvermittlung in einem Netzknoten zu vereinen.

Im Rahmen der Entwicklung zukünftiger, integrierter Breitbandnetze wird diskutiert, nach welchem Verfahren die digitale oder analoge Information - zum Teil mit hohem Bandbreitebedarf - in digitalen Netzen übertragen werden soll. Schon lange bekannt ist die Paketvermittlung (Packet Switching), bei der der (digitale) Nachrichtenstrom in einzelne Pakete aufgeteilt wird. In jedem Paket sind neben der Nutzinformation Zusatzinformationen enthalten, u.a. Angaben über das Ziel (Adresse). Dadurch lassen sich Nachrichten aufgrund ihrer Paketadressen zu einem an der Verbindung beteiligten Partner lenken, was nur dann Übertragungskapazität erfordert, wenn tatsächlich eine Nachricht zu übermitteln ist.

Weiterhin ist seit langem die Leitungsvermittlung (Circuit Switching) bekannt, welche Übertragungskapazität für die gesamte Verbindungsdauer erfordert, unabhängig davon, ob gerade Nachrichten übermittelt werden oder nicht. Insbesondere beim Fernsprechnetz werden doppeltgerichtete Übertragungswege zur Verfügung gestellt, obwohl im allgemeinen nur einer der beiden Fernsprechteilnehmer spricht.

Bisher führte die Anwendung der Paketvermittlung beim Datenverkehr zu Durchsatzraten in der Größenordnung von 1000 Paketen je Sekunde und darüber. Für künftige Dienste unter Benutzung des Verfahrens der Paketvermittlung, beispielsweise bei der Bildkommunikation, rechnet man heute bereits mit der tausendfachen Menge. Um solche Durchsatzraten zu erreichen, wird beim "Fast Packet Switching" die zeitaufwendige Behandlung der Protokolle vom eigentlichen Durchschaltevorgang getrennt und die Pakete werden nach ihren Zieladressen auf die Übertragungswege verteilt. Zum Beschleunigen des Durchschaltevorgangs in den Koppelnetzen dienen stark vereinfachte Protokolle, die sich sehr schnell auswerten lassen. Am Eingang des Vermittlungsknotens werden die ankommenden Datenpakete dezentral verarbeitet, indem diese entsprechend ihrem Ziel eine interne Adreßinformation erhalten, über das zentrale Koppelnetz durchgeschaltet und am Ausgang dann ohne die interne Adreßinformation weitergeleitet werden.

Ausführungsformen des "Fast Packet Switching" sind "Asynchronous Time Division" und "Frame Relaying". Hinsichtlich der Übertragungsverfahren (Transfer Mode) unterscheidet man "Synchronous Transfer Mode" und "Asynchronous Transfer Mode" sowie als Mischform "Hybrid Configurations". Beim "Synchronous Transfer Mode" wird ein bestimmter Übertragungskanal allein durch seinen zeitlichen Abstand von einem Synchronwort identifiziert. Beim "Asynchronous Transfer Mode" wird der jeweilige Kanal durch die Adressen (Header) seiner Pakete (Blöcke) gekennzeichnet, insbesondere ist der Anfang der Blöcke zu erkennen, damit sich die Header auswerten lassen. Hierzu werden Flags oder eine unterlegte Synchronstruktur verwendet, die eine konstante Blocklänge voraussetzt. Ein Beispiel hierfür ist "Asynchronous Time Division", bei dem immer wieder Synchronwörter als "Leerblöcke" in den Bitstrom eingeblendet werden.

Praktische Bedeutung dürften zunächst hybride Konfigurationen mit Kombination von "Synchronous Transfer Mode" und "Asynchronous Transfer Mode" erlangen, da der Netzbetreiber aufgrund der hohen Investitionskosten die bereits bestehenden, nach dem "Synchronous Transfer Mode" aufgebauten Netze so lange wie möglich weiterbenutzen will.

In der europäischen Patentanmeldung mit der Veröffentlichungsnummer 0 183 592 wurde ein Breitband-Vermittlungssystem vorgeschlagen, bei dem die Nachricht in Blöcke (Cells) zerlegt und über breitbandige Übertragungswege nach einem asynchronen Zeitvielfachverfahren übertragen werden. Die Blöcke (Cells) können gleiche oder unterschiedliche Länge aufweisen. Die Blöcke bestehen aus Nutz- sowie aus Adressinformation, wobei die Adressinformation in einem sogenannten Blockkopf (Header) untergebracht ist. Die Anzahl der Bits eines Blocks wird als dessen Länge bezeichnet, wobei in den Standardisierungsvorschlägen hierfür Werte zwischen 120 und 256 Bits für die Nutzinformation und 32 oder 16 Bits für den Header vorgesehen sind. Die Zeitintervalle, in denen Blöcke übertragen werden, werden als Rahmen (Frames) bezeichnet. Dabei kann ein Rahmen einen gültigen Block enthalten oder leer sein. Zwischen zwei Teilnehmern des Breitband-Vermittlungssystems besteht eine "virtuelle Verbindung" (virtual Connection), welche dadurch aufrechterhalten wird, daß die von den Teilnehmereinrichtungen abgesandten Blöcke mit eindeutigen Header-Kennungen versehen werden, die den Vermittlungsknoten das korrekte Weiterleiten der Blöcke gestatten. Die im Vermittlungsknoten ankommenden Blöcke von einer eingehenden Leitung werden unter Umsetzung des Headers auf eine ausgehende Leitung übertragen. Da während eines Rahmens zwei oder mehrere Blöcke für die gleiche Ausgangsleitung eintreffen können, müssen im Vermittlungsknoten sogenannte Wartepuffer vorgesehen werden. Im Wartepuffer werden einer oder mehrere dieser Blöcke solange zwischengespeichert, bis für diese ein freier Rahmen zur Verfügung steht.

Hinsichtlich der Wartepufferanordnung können die Vermittlungsknoten zentralgepufferte Systeme (wie beispielsweise aus der europäischen Patentanmeldung mit der Veröffentlichungsnummer 0 183 592 bekannt) oder dezentral gepufferte Systeme sein. Bei zentral gepufferten Systemen gibt es nur einen Puffer, in dem jede eingehende Leitung ihre ankommenden Blöcke ablegt und aus dem jede abgehende Leitung die für sie bestimmten Blöcke wieder ausliest. Systeme mit dezentraler Pufferung werden dahingehend unterschieden, ob eine Pufferung von Blöcken ausschließlich auf der Eingangsseite (eine Ausführungsform hierfür ist beispielsweise in der nicht vorveröffentlichten deutschen Patentanmeldung mit dem amtlichen Aktenzeichen P 37 14 385.9 beschrieben) erfolgt oder ob die Puffer ausschließlich vor den abgehenden Leitungen (vgl. beispielsweise IEEE, B 10.2.1, 1987, "The Knockout Switch: A Simple, Modular Architecture for High-Performance Packet Switching von J.S. Yeh et al) angeordnet sind oder ob es sich um Systeme mit Eingangs- und Ausgangspufferung handelt. Hier spricht man auch von Koppelfeldpufferung, wenn jedem Koppelpunkt einer Koppelmatrix ein Puffer zugeordnet ist.

Wie die vorstehenden Ausführungen zeigen, erfordert die Ausgestaltung des Koppelfelds für einen Vermittlungsknoten eines Breitband-Vermittlungssystems langwierige Untersuchungen und besondere Überlegungen, um die vielfältigen Abhängigkeiten und deren gegenseitigen Beeinflussungen zu berücksichtigen. Außerdem ist zu berücksichtigen, daß die Schaltungstechnologie für die betrachteten Koppelfelder an den Grenzen der gegenwärtigen Halbleiterschaltzeiten liegt. Insbesondere können Leistungsengpässe auftreten, wenn mehrere Blöcke gleichzeitig durch das Koppelnetz einer Vermittlungsanlage geschickt werden. Die Blöcke können sich gegenseitig beeinflussen, wenn in dem Koppelnetz weniger Zwischenleitungen als notwendige Wege zur Verfügung stehen. Zwei Arten der Beeinflussung sind dabei von besonderer Bedeutung: der Konflikt und die Behinderung.

Zwei Blöcke (bzw. die sie aussendenden Schaltungen) stehen im Konflikt zueinander, wenn für die Übertragung die gleichen Schaltungsteile benutzt werden sollen. In der Regel wird dann einer der Blöcke gegenüber dem anderen priorisiert und der andere Block muß entweder warten oder geht verloren.

Bei der Behinderung muß ein Block V auf die Bedienung eines Blocks U warten, wobei gleichzeitig aber U nicht bedient wird, weil ein Konflikt zwischen Block U und einem dritten Block W auftritt. Somit ist eine normale Wartesituation in einem Wartepuffer keine Behinderung, solange der erste Block in dem Puffer in jedem Rahmentakt übertragen wird. Erst wenn dieser in einen Konflikt tritt und nicht bedient wird, dadurch gleichzeitig aber auch kein anderer Block in diesem Wartepuffer übertragen werden kann, tritt eine Behinderung auf.

Der Begriff der Behinderung ist für die Leistungsbewertung solcher Systeme wichtig. Denn wenn ein nicht leerer Wartepuffer während einer Rahmenzeit nicht abgearbeitet werden kann, so kann man sich vorstellen, daß stattdessen ein zusätzlicher "virtueller" Block bearbeitet wird. Die Summe aus virtueller und realer Last ergibt dann die gesamte Belastung des Systems. Die virtuelle Last kann bei einigen Koppelfeldern nahezu so groß werden wie die reale Last. Dieses gilt vor allem für Koppelfelder, die die Eingangspufferung verwenden.

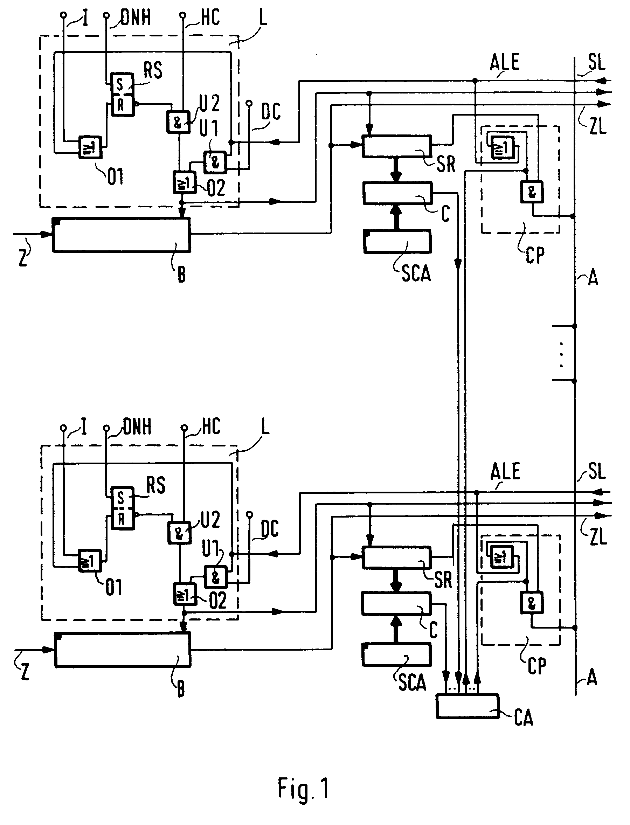

In Fig. 1 ist ein Koppelfeld mit Eingangspufferung dargestellt, welches in der nicht vorveröffentlichten deutschen Patentanmeldung mit dem amtlichen Aktenzeichen P 37 14 385.9 beschrieben ist. Auf die Beschreibung dieser älteren deutschen Patentanmeldung wird hiermit ausdrücklich Bezug genommen.

Aus dem Sammelschienensystem mit Zubringerleitungen Z und Abnehmerleitungen A wird ein Koppelfeld nach Art eines Raummultiplex-Koppelfelds aufgebaut. Für jeden Koppelpunkt CP ist eine eigene Auswertelogik für die im Blockkopf enthaltenen Informationen vorgesehen. Die über die Zubringerleitung Z zugeführten Blöcke werden im Koppelfeld eingangsseitig im Eingangspuffer B aufgenommen. Die vom Teilnehmer oder dem vorangegangenen Vermittlungsknoten empfangenen Rahmen stehen rechtsbündig im Eingangspuffer B. Mittels eines jedem Koppelpunkt CP zugeordneten Komparators C wird die im Speicher SCA gespeicherte Adresse der spaltenweise angeordneten Abnehmerleitungen A mit der im Blockkopf enthaltenen Weglenkungs-Information verglichen. Jeder der Abnehmerleitungen A ist eine Entscheiderschaltung CA zugeordnet, welche im Falle gleicher Weglenkungs-Informationen die Reihenfolge der durchzuschaltenden, zeilenweise angeordneten Zubringerleitungen Z festlegt. Die Reihenfolge wird durch die räumliche Anordnung der Zubringerleitungen Z bestimmt, wobei jede Entscheiderschaltung CA alle ihr zugeordneten Komparatoren C zyklisch abfragt.

Mit dem Eingangspuffer B ist eine der Anzahl von Abnehmerleitungen A entsprechende Anzahl von Schieberegistern SR verbunden, in welchen die Weglenkungs-Information gespeichert wird. Jedes Schieberegister SR ist einerseits mit dem Koppelpunkt CP und andererseits mit dem Komparator C verbunden. Der Aktivierungseingang des zugehörigen Koppelpunktes ist über die Entscheiderschaltung CA mit dem Komparator C verbunden. Die Entscheiderschaltung CA steuert durch ein von einer Logikschaltung L abgegebenes Signal die Aufnahme einer neuen Weglenkungs-Information in das Schieberegister SR. Das Signal wird durch ein der Logikschaltung L zugeführtes Freigabesignal ALE ausgelöst.

Die mit dem Eingangspuffer B verbundene Logikschaltung L weist ein erstes UND-Glied U1 und ein erstes ODER-Glied O1 auf. Jeweils der erste Eingang des ersten UND-Glieds U1 und des ersten ODER-Glieds O1 der Logikschaltung L ist mit der Entscheiderschaltung CA verbunden. Dem zweiten Eingang des ersten ODER-Glieds O1, dessen Ausgang mit einem Rücksetz-Eingang R eines bistabilen Kippglieds RS verbunden ist, wird ein in dem Vermittlungsknoten erzeugtes Startsignal I zugeführt. Dem zweiten Eingang des ersten UND-Glieds U1, dessen Ausgang mit dem ersten Eingang eines zweiten ODER-Glieds O2 verbunden ist, wird ein in dem Vermittlungsknoten erzeugter Datentakt DC zugeführt. Der invertierende Ausgang des bistabilen Kippglieds RS ist mit einem ersten Eingang eines zweiten UND-Glieds U2 verbunden, an dessen zweiten Eingang ein in dem Vermittlungsknoten erzeugter Rahmentakt HC anliegt. Der Ausgang des zweiten UND-Glieds U2 ist mit dem zweiten Ausgang des zweiten ODER-Glieds verbunden, dessen Ausgang sowohl mit dem Eingangspuffer B als auch mit dem Schieberegister SR verbunden ist. Am Setzeingang S des bistabilen Kippglieds RS liegt ein in dem Vermittlungsknoten aus dem Rahmentakt HC abgeleitetes Sperr-Signal DNH an.

Wenn das bistabile Kippglied RS am invertierenden Ausgang ein Schaltsignal abgibt und am zweiten Eingang des zweiten UND-Glied U2 der Rahmentakt HC anliegt, wird der Blockkopf des ersten Rahmens im Eingangspuffer B in das Schieberegister SR eingelesen. Der Komparator C vergleicht die im Blockkopf enthaltene Weglenkungs-Information mit der im Speicher SCA enthaltenen Adresse der spaltenweise angeordneten Abnehmerleitungen A.

Im Falle der Übereinstimmung wird vom Komparator C zur Entscheiderschaltung CA ein Signal gegeben und die Entscheiderschaltung CA legt anhand der empfangenen Signale die Reihenfolge der durchzuschaltenden, zeilenweise angeordneten Zubringerleitungen Z fest. Die Entscheiderschaltung CA legt hierzu an den Eingangspuffer B das Freigabesignal ALE an und schaltet den ausgewählten Koppelpunkt CP durch. Mit Hilfe des Datentakts DC werden die Daten D über den Koppelpunkt CP auf die Abnehmerleitung A geschaltet.

Für den Fall, daß keine Weglenkungs-Information im Blockkopf enthalten ist, wird die im Schieberegister SR gespeicherte Weglenkungs-Information nicht auf die Abnehmerleitung A gesendet.

In der P 37 14 385.9 wird also eine Vermittlungseinrichtung nach dem Prinzip der asynchronen Zeitvielfachtechnik beschrieben, die nach Art eines Raummultiplex-Koppelfeldes aufgebaut ist. Jeder Koppelpunkt CP ist mit einem Komparator C ausgestattet, der die Adresse der spaltenweise angeordneten Abnehmerleitung A mit der Wegelenkungs-Information vergleicht. Im Falle einer mehrfachen Übereinstimmung in einer Spalte bestimmt eine der Abnehmerleitung A zugeordnete Entscheiderschaltung CA die Reihenfolge, in der die Koppelpunkte schalten sollen (Fig. 1).

Dabei ist mit jeder Zubringerleitung Z ein Eingangspuffer B verbunden, in dem die Blöcke zwischengespeichert werden, bis sie auf eine der Abnehmerleitungen A gelangen.

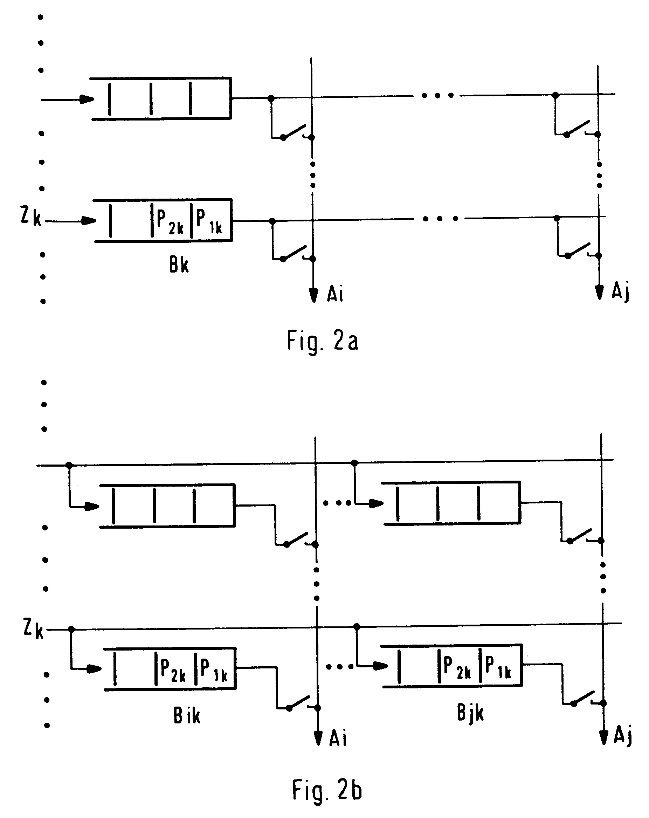

Wie umfangreiche Untersuchungen ergeben haben, kann es vorkommen, daß dies bei hohen Belastungen zu Pufferüberläufen führt. Dies wird nachfolgend näher erläutert, wobei ergänzend auf Fig. 2a verwiesen wird. Wir betrachten den Fall eines Zugriffskonfliktes einer Anzahl n Zubringerleitungen Z auf eine Abnehmerleitung Aᵢ. Die Entscheiderschaltung CA regelt, in welcher Reihenfolge die jeweils ersten Blöcke der n betroffenen Eingangspuffer B auf die Abnehmerleitung Aᵢ gelangen. Es gibt einen Eingangspuffer Bₖ (Zubringerleitung Zk) mit der längsten Wartezeit: Hier muß der erste Block P₁ₖ im Eingangspuffer Bₖ (n-1) Blockübertragungszeiten warten, bis er auf die Leitung Aᵢ gelangt. Der zweite Block P₂ₖ in diesem Eingangspuffer Bₖ muß n Blockübertragungszeiten warten, um auf die von ihm gewünschte Ausgangsleitung Aⱼ zu gelangen. Diese Wartezeit tritt insbesondere auch dann auf, wenn die Ausgangsleitung Aⱼ während der Dauer der n Blockübertragungszeiten frei war. An diesem Beispiel wird deutlich, daß freie Kanalkapazitäten ungenutzt bleiben, was sich dann bei hohen Belastungen deutlich bemerkbar macht.

Es sei noch erwähnt, daß aus dem Dokument "NTZ, Band 40, Nr. 8, August 1987, Seiten 572-577, Berlin, DE; U. Killat: Asynchrone Zeitvielfachübermittlung für Breitbandnetze" ein Koppelfeld, welches nach dem asynchronen Zeitvielfachübermittlungssystem arbeitet, bekannt ist. Das Koppelfeld ist mit Zubringerleitungen und Abnehmerleitungen gekoppelt. Mit den Zubringerleitungen sind jeweils Eingangspuffer verbunden, in denen ankommende Blöcke zwischengespeichert werden. Der Ausgang jedes Eingangspuffers ist mit einer einer Abnehmerleitung zugeordneten Anordnung verbunden, die ein Schieberegister, einen Komparator und einen Speicher mit der Adresse des Koppelpunktes enthält. In dem Schieberegister wird die Wegelenkungs-Information des betreffenden Blocks gespeichert. Ergibt der Vergleich im Komparator, das die Wegelenkungs-Information mit der Adresse des Koppelpunktes übereinstimmt, wird der Block aus dem Eingangspuffer auf die dem Koppelpunkt zugeordnete Abnehmerleitung gegeben. Wenn auf mehreren Zubringerleitungen gleichzeitig Blöcke ankommen, die auf eine Abnehmerleitung gegeben werden sollen, entscheidet eine jeder Abnehmerleitung zugeordneten Entscheiderschaltung (arbiter) über die Reihenfolge der Auslesung aus den Eingangspuffern.

Aus dem Dokument "IEEE JOURNAL ON SELECTED AREAS IN COMMUNICATIONS, Band SAC-5, Nr. 8, Oktober 1987, Seiten 1315-1326, IEEE, New York, US; M.G.H. Katevenis: Fast switching and fair control of congested flow in broadband networks" ist ein Koppelfeld für Breitbandnetzwerke bekannt, welches eine ähnliche Struktur, wie das oben genannte Koppelfeld aufweist (Fig. 10, Seite 1323). Jedem Koppelpunkt ist jedoch zusätzlich ein Speicher zugeordnet.

Der Erfindung liegt die Aufgabe zugrunde, ein Koppelfeld für ein Vermittlungssystem zu schaffen, welches eine andere Steuerung des Auslesevorganges aus einem Eingangspuffer vorsieht.

Eine erste Lösung der Aufgabe weist folgende Merkmale auf: Jeder Komparator (C) ist mit einem Flip-Flop (FF) gekoppelt, mit dessen invertierenden Ausgang ein Koppelpunkt (CP) und eine Taktschaltung (T) und mit dessen nichtinvertierenden Ausgang die Entscheiderschaltung (CA) gekoppelt ist.

Eine zweite Lösung der Aufgabe weist folgende Merkmale auf:
Einem Eingangspuffer (B) sind mehrere Komparatoren (C) und mit diesen jeweils gekoppelte Flip-Flops (FF) zugeordnet, die entsprechend der Weglenkungsinformation die Blöcke auf einer Zubringerleitung (Zi) auf mehrere Abnehmerleitungen (Ak) durchschalten.

Bei der ersten Lösung kann das Koppelfeld als Konzentrator dienen. Es bewirkt dann eine Konzentrierung der Datenströme von mehreren Zubringerleitungen auf eine Abnehmerleitung. Die Entscheiderschaltung erhält von dem Flip-Flop die Information, ob ein Block der entsprechenden Abnehmerleitung zugeteilt ist, und veranlaßt das Aktivieren einer mit der Taktschaltung verbundenen Leitung. Ist der Block nicht für die Abnehmerleitung gedacht, aktiviert das Flip-Flop die Leitung.

Wenn jedem Koppelpunkt ein Eingangspuffer zugeordnet ist, wird ein Konflikt und eine Blockierung weitgehend vermieden. In der anhand Fig. 2b geschilderten Situation enthalten die Eingangspuffer Bᵢₖ und Bⱼₖ beide die Blöcke P₁ₖ und P₂ₖ. Der für die Leitung Aⱼ bestimmte Block P₂ₖ muß - unabhängig von der Art des Zugriffskonfliktes auf die Leitung Aᵢ - nur eine Blockübertragungszeit warten, bis dieser auf die freie Leitung Aⱼ gelangen kann.

Bei der zweiten Lösung dient das Koppelfeld als Demultiplexer. Daten, die von einer Zubringerleitung kommen werden auf mehrere Abnehmerleitungen verteilt. Für diesen Fall sind mit den mehrfach vorhandenen Komparatoren jeweils Flip-Flops verbunden.

Gemäß Patentanspruch 3 ist eine Entscheiderschaltung (CA) mit Koppelpunkten (CP) und Komparatoren (C) gekoppelt und ist jeweils einer Abnehmerleitung (Ak) zugeordnet. Im Falle mehrfacher Übereinstimmung ist sie zur Festlegung der Reihenfolge der durchzuschaltenden, zeilenweise angeordneten Zubringerleitungen (Zi) vorgesehen ist.

Gemäß Patentanspruch 4 ist mit Zubringerleitungen (Zi) jeweils eine Schnittstellenschaltung (IM) gekoppelt, welche zur Zwischenspeicherung, zur Rahmensynchronisierung und zur Serien-Parallel-Wandlung der Blöcke und welche zur Weiterleitung von Blöcken über eine busartige Verkabelung an die Eingangspuffer (B) vorgesehen ist. Das Koppelfeld weist den Vorteil auf, daß keine größeren Verzögerungen bei der Durchschaltung der Blöcke im Koppelfeld auftreten und das Entstehen von Konflikten weitgehend vermieden wird.
Die Erfindung wird im folgenden anhand in der Zeichnung dargestellter Ausführungsformen näher beschrieben und erläutert. Es zeigen:
Fig. 1 eine Ausführungsform für ein Koppelfeld mit Eingangspufferung,
Fig. 2a und 2b in Gegenüberstellung die Zuordnung von Eingangspuffer und Koppelfeld gemäß Fig. 1 und Fig. 3,
Fig. 3 eine Ausführungsform für ein Koppelfeld mit Koppelfeldpufferung,
Fig. 4 eine andere Ausführungsform für ein Koppelfeld mit Koppelfeldpufferung und
Fig. 5 eine andere Ausführungsform für ein Koppelfeld mit Eingangspufferung bei Anwendung als Konzentrator.

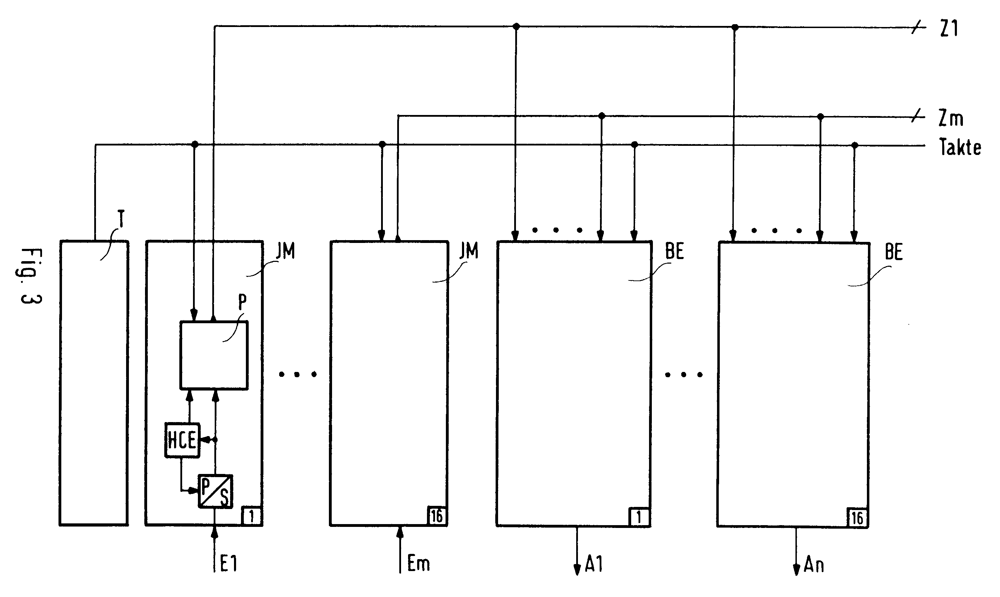

Die Ausführungsformen von Koppelfeldern mit Expansionsstufe (Dekonzentrator) gemäß der Fig. 1 und Fig.2a wurden bereits ausführlich erläutert. Diese Koppelfelder lassen sich aus baugleichen Einheiten BE aufbauen, wodurch das Koppelfeld "spaltenweise" zerlegt wird. Vorzugsweise werden die Daten der Zubringerleitungen Z allen Einheiten BE parallel mit einer busartigen Verkabelung angeboten (siehe Fig. 3). Die Umsetzung von der Zubringerleitung Z auf die busartige Verkabelung wird von Schnittstellenschaltungen IM vorgenommen.

Jede Schnittstellenschaltung IM enthält neben Funktionen zur Serien-Parallel-Wandlung der Daten eine Pufferschaltung P, mit der alle einlaufenden Daten auf einen Blockanfang synchronisiert werden. Die Schnittstellenschaltung IM und Baueinheiten BE werden vorzugsweise als Steckkarten für eine Rückwandverdrahtung ausgeführt, mit der die busartige Verkabelung besonders vorteilhaft zu realisieren ist.

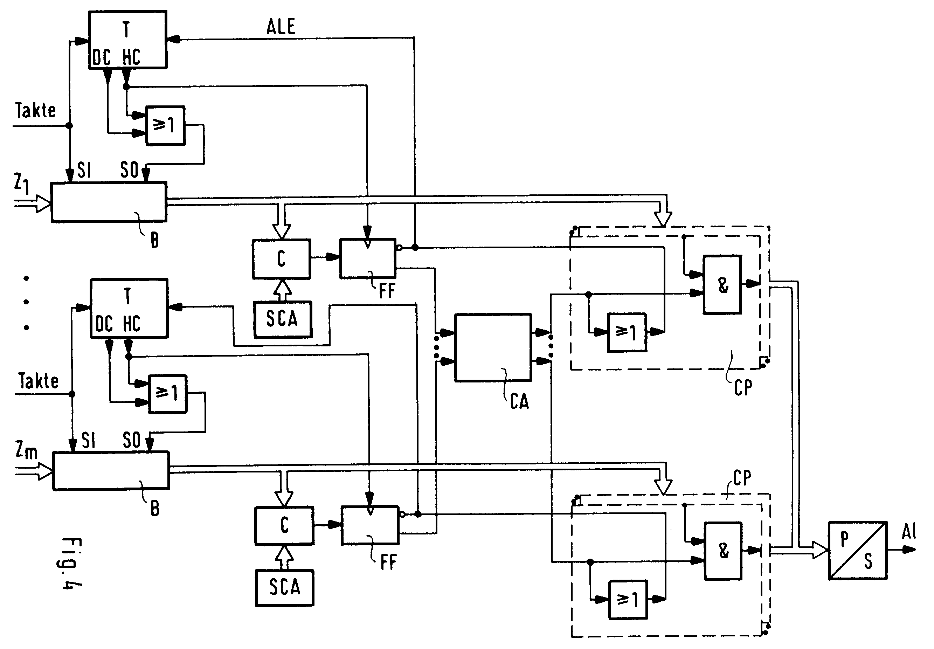

In Fig. 4 ist für ein Koppelfeld mit Koppelfeldpufferung (Baueinheit mit Eingangspufferung) eine Koppelfeldsteuerung dargestellt, wobei die Funktion der verwendeten Schaltungsteile bereits anhand der Fig. 1 ausführlich erläutert wurde. Bei dem nach Art eines Raummultiplex-Koppelfeld aufgebauten Sammelschienensystem ist mit jeder Zubringerleitung Z jeweils eine der Anzahl von Abnehmerleitungen (A) entsprechende Anzahl von Eingangspuffern B verbunden ist, in welchen die zugeführten Blöcke zwischengespeichert werden. An der ausgangsseitigen Busleitung eines Eingangspuffers B ist ein dem Koppelpunkt zugeordneter Komparator C angeschlossen, welcher die im Speicher SCA gespeicherten Adressen der spaltenweise angeordneten Abnehmerleitungen A mit der Weglenkungs-Information vergleicht. Im Falle mehrfacher Übereinstimmung wird durch die sowohl mit den Komparatoren C in Verbindung stehenden als auch mit den Koppelpunkten CP verbundene Entscheiderschaltung CA die Reihenfolge der durchzuschaltenden, zeilenweise angeordneten Zubringerleitungen Z festlegt.

Jeder Komparator C ist mit einem Flip-Flop FF verbunden, an dessen invertierenden Ausgang die Koppelpunkte CP und an dessen nichtinvertierenden Ausgang die Entscheiderschaltung CA angeschlossen ist.

Nach der Auswertung der Wegelenkungs-Information durch den Komparator sind drei Fälle zu unterscheiden:
1. Der Block P₁ₖ ist für die Abnehmerleitung Aₗ gedacht und erhält von der Entscheiderschaltung CA die Abnehmerleitung Aₗ zugeteilt. In diesem Fall schaltet der Koppelpunkt CP und der Block P₁ₖ wird aus dem Eingangspuffer B ausgelesen (Aktivieren der Leitung ALE).
2. Der Block P₁ₖist für die Abnehmerleitung Al gedacht und die Leitung Aₗ wurde von der Entscheiderschaltung CA noch nicht zugeteilt. Dies ist ein Wartezustand, bis die Abnehmerleitung Aₗ zugeteilt wird (vgl. 1).
3. Der Block P₁ₖ ist nicht für die Abnehmerleitung Aₗ gedacht. Es gibt kein Signal von der Entscheiderschaltung CA. Die Leitung ALE wird über den invertierenden Ausgang des Flip-Flop FF aktiviert. Der Block P₁ₖ wird ausgelesen, gelangt aber nicht über den Koppelpunkt CP auf die Abnehmerleitung Aₗ.

Die Entscheiderschaltungen der Fig. 3 und 4 definieren bei nicht-leeren Puffern eine fallende Priorität der Zubringerleitungen 1, 2,...

Damit hierdurch kein unfairer Entscheidungsalgorithmus implementiert wird, sollte diese Priorisierung für jede Baueinheit BE anders aussehen, etwa in der folgenden Art:

| Abnehmerleitung | Fallende Priorität der Zubringerleitungen |
|---|---|
| 1 | 1 2 3 ... |
| 2 | 2 3 4 ... |
| 3 | 3 4 5 ... |

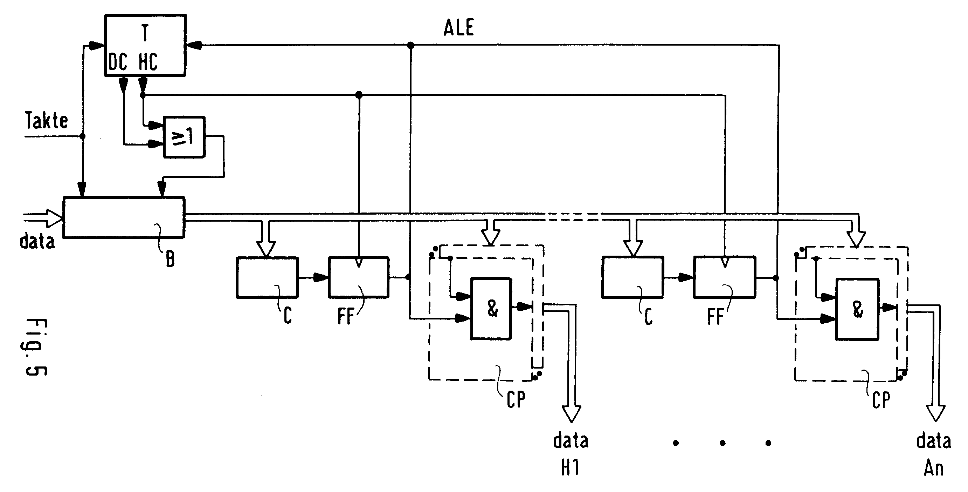

Eine Baueinheit BE kann vorteilhaft für Konzentratoranwendungen eingesetzt werden: Sie bewirkt dann eine Konzentrierung der Datenströme von m Leitungen auf eine Leitung. Für die Gegenrichtung wird dann allerdings eine weitere Komponente benötigt, die in Fig. 5 dargestellt ist. Sie gestattet es, die Daten, die von einer Zubringerleitung Z kommen, entsprechend ihrer Wegelenkungs-Information auf n Abnehmerleitungen A zu vermitteln: Dies entspricht auch einer Demultiplexer-Funktion.

Da kein Zugriffskonflikt auftreten kann, ist die Entscheiderschaltung CA entfallen.
Die Komponente aus Fig. 3 kann auch als statistischer Multiplexer wirken: In diesem Fall muß der Komparator C anzeigen, daß überhaupt ein Block auf der entsprechenden Zubringerleitung Z vorhanden ist.

## Patentansprüche

1. Koppelfeld für ein Vermittlungssystem, bei dem Blöcke nach einem Zeitvielfachverfahren, insbesondere asynchronen Zeitvielfachverfahren, übertragen werden und anhand der im Blockkopf der Blöcke enthaltenen Weglenkungs-Information die Durchschaltung der Blöcke in der Vermittlungseinrichtung erfolgt, welches
- mit einer Anzahl von Zubringerleitungen (Zi) und einer Anzahl von Abnehmerleitungen (Ak) gekoppelt ist,
- eine Anzahl von Eingangspuffern (B) zur Zwischenspeicherung der über die jeweilige Zubringerleitung (Zi) zugeführten Blöcke,
- jeweils ein mit einem Eingangspuffer (B) gekoppeltes Schieberegister (SR) zur Speicherung der Weglenkungs-Information,
- jeweils einen mit dem Schieberegister (SR) und einem Koppelpunkt (CP) gekoppelten Komparator (C) zum Vergleich der im Schieberegister (SR) gespeicherten Weglenkungs-Information mit der Adresse einer zugeordneten Abnehmerleitung (Ak), und
- Entscheiderschaltungen (CA) zur Festlegung der Reihenfolge der auszulesenden Blöcke enthält,
dadurch gekennzeichnet,
daß jeder Komparator (C) mit einem Flip-Flop (FF) gekoppelt ist, mit dessen invertierenden Ausgang ein Koppelpunkt (CP) und eine Taktschaltung (T) und mit dessen nichtinvertierenden Ausgang die Entscheiderschaltung (CA) gekoppelt ist.

2. Koppelfeld für ein Vermittlungssystem, bei dem Blöcke nach einem Zeitvielfachverfahren, insbesondere asynchronen Zeitvielfachverfahren, übertragen werden und anhand der im Blockkopf der Blöcke enthaltenen Weglenkungs-Information die Durchschaltung der Blöcke in der Vermittlungseinrichtung erfolgt, welches
- mit einer Anzahl von Zubringerleitungen (Zi) und einer Anzahl von Abnehmerleitungen (Ak) gekoppelt ist,
- eine Anzahl von Eingangspuffern (B) zur Zwischenspeicherung der über die jeweilige Zubringerleitung (Zi) zugeführten Blöcke und
- wenigstens einen einem Eingangspuffer (B) zugeordneten und mit einem Koppelpunkt (CP) gekoppelten Komparator (C) zum Vergleich der Weglenkungs-Information mit der Adresse einer zugeordneten Abnehmerleitung (Ak),
dadurch gekennzeichnet,
daS einem Eingangspuffer (B) mehrere Komparatoren (C) und mit diesen jeweils gekoppelte Flip-Flops (FF) zugeordnet sind, die entsprechend der Weglenkungsinformation die Blöcke auf einer Zubringerleitung (Zi) auf mehrere Abnehmerleitungen (Ak) durchschalten.

3. Koppelfeld nach Anspruch 1,
dadurch gekennzeichnet, daß eine Entscheiderschaltung (CA), die mit Koppelpunkten (CP) und Komparatoren (C) gekoppelt ist und die jeweils einer Abnehmerleitung (Ak) zugeordnet ist, im Falle mehrfacher Übereinstimmung zur Festlegung der Reihenfolge der durchzuschaltenden, zeilenweise angeordneten Zubringerleitungen (Zi) vorgesehen ist.

4. Koppelfeld nach Anspruch 1, 2 oder 3,
dadurch gekennzeichnet, daß mit Zubringerleitungen (Zi) jeweils eine Schnittstellenschaltung (IM) gekoppelt ist, welche zur Zwischenspeicherung, zur Rahmensynchronisierung und zur Serien-Parallel-Wandlung der Blöcke und welche zur Weiterleitung von Blöcken über eine busartige Verkabelung an die Eingangspuffer (B) vorgesehen ist.

## Claims

1. Switching network for a transmission system, in which blocks are transmitted according to a time-division multiplex method, especially asynchronous time-division multiplex method, and the blocks are switched through in the exchange in response to the routing information contained in the headers of the blocks, which system
- is coupled to a plurality of supply lines (Zi) and a plurality of trunk lines (Ak),
- comprises a plurality of input buffers (B) for buffering the blocks supplied over each supply line (Zi),
- comprises a shift register (SR) for storing routing information and coupled to each input buffer (B)
- comprises a comparator (C) coupled to the shift register (SR) and to a switching point (CP), for comparing the routing information stored in the shift register (SR) with the address of an assigned trunk line (Ak), and
- decision circuits (CA) for determining the order of the blocks to be read,
characterized in that each comparator (C) is coupled to a flip-flop (FF) to whose inverting output a switching point (CP) and a clock circuit (T) is coupled, and to whose non-inverting output the decision circuit (CA) is coupled.

2. Switching network for a transmission system, in which blocks are transmitted according to a time-division multiplex method, especially asynchronous time-division multiplex method, and the blocks are switched through in the exchange in response to the routing information contained in the headers of the blocks, which system
- is coupled to a plurality of supply lines (Zi) and a plurality of trunk lines (Ak),
- comprises a plurality of input buffers (B) for buffering the blocks supplied over each supply line (Zi),
- comprises at least a comparator (C) assigned to an input buffer (B) and coupled to a switching point (CP), for comparing the routing information with the address of an assigned trunk line (Ak),
characterized in that a plurality of comparators (C) and flip-flops (FF) coupled thereto are assigned to an input buffer (B) and switch the blocks on a supply line (Zi) through to a plurality of trunk lines (Ak) in response to the routing information.

3. Switching network as claimed in Claim 1, characterized in that a decision circuit (CH), coupled to switching points (CP) and comparators (C) and assigned to a trunk line (Ak), in the case of correspondence determines the order of the supply lines (Zi) arranged line-by-line which are to be switched through.

4. Switching network as claimed in Claim 1, 2 or 3, characterized in that the supply lines (Zi) are coupled each to an interface circuit (IM) which is arranged for buffering, frame synchronization and serial-to-parallel conversion of the blocks and is provided for further transporting blocks to the input buffers (B) over a bus-type cabling.

## Revendications

1. Réseau de commutation pour un système de commutation, dans lequel des blocs sont transmis selon un procédé de multiplexage dans le temps, en particulier un procédé de multiplexage dans le temps asynchrone et, sur base des informations directionnelles contenues dans l'en-tête des blocs, la commutation des blocs s'effectue dans le dispositif de commutation, qui :
- est couplé à un certain nombre de lignes de desserte (Zi) et à un certain nombre de lignes d'abonnés (Ak),
- contient un certain nombre de mémoires tampons d'entrée (B) pour stocker temporairement les blocs acheminés via la ligne de desserte respective (Zi), et :
- contient un registre à décalage (SR) couplé à une mémoire tampon d'entrée (B) pour mémoriser les informations directionnelles,
- contient un comparateur (C) couplé au registre à décalage (SR) et à un point de commutation (CP) pour comparer les informations directionnelles stockées dans le registre à décalage (SR) avec l'adresse d'une ligne d'abonné correspondante (Ak), et
- contient des circuits de décision (CA) pour fixer la succession des blocs à lire,
caractérisé en ce que chaque comparateur (C) est couplé à un circuit bistable (FF) à la sortie inverseuse duquel sont couplés un point de commutation (CP) et un circuit de rythme (T) et à la sortie non inverseuse duquel est couplé le circuit de décision (CA).

2. Réseau de commutation pour un système de commutation, dans lequel des blocs sont transmis selon un procédé de multiplexage dans le temps, en particulier un procédé de multiplexage dans le temps asynchrone et, sur base des informations directionnelles contenues dans l'en-tête des blocs, la commutation des blocs s'effectue dans le dispositif de commutation, qui :
- est couplé à un certain nombre de lignes de desserte (Zi) et à un certain nombre de lignes d'abonnés (Ak),
- contient un certain nombre de mémoires tampons d'entrée (B) pour stocker temporairement les blocs acheminés via la ligne de desserte respective (Zi), et
- contient au moins un comparateur (C) affecté à une mémoire tampon d'entrée (B) et couplé à un point de commutation (CP) pour comparer les informations directionnelles à l'adresse d'une ligne d'abonné correspondante (Ak), caractérisé en ce qu'à une mémoire tampon d'entrée (B) sont affectés plusieurs comparateurs (C) et des circuits bistables (FF) couplés à ceux-ci respectivement, ces circuits bistables commutant les blocs d'une ligne de desserte (Zi) sur plusieurs lignes d'abonnés (Ak) en fonction des informations directionnelles.

3. Réseau de commutation selon la revendication 1, caractérisé en ce qu'un circuit de décision (CA), qui est couplé à des points de commutation (CP) et à des comparateurs (C) et est affecté respectivement à une ligne d'abonné (Ak), sert, dans le cas d'une coïncidence multiple, à établir la succession des lignes de desserte (Zi) agencées par lignes à commuter.

4. Réseau de commutation selon la revendication 1, 2 ou 3, caractérisé en ce qu'aux lignes de desserte (Zi) est respectivement couplé un circuit d'interface (IM), qui est prévu pour la mise en mémoire tampon, la synchronisation des trames et la conversion série-parallèle des blocs et également pour la transmission des blocs via un câblage de type bus à la mémoire tampon d'entrée (B).
